# EUROPÄISCHE PATENTSCHRIFT

(11) **EP 1 754 655 B1**
(45) Veröffentlichungstag und Bekanntmachung des Hinweises auf die Patenterteilung: **11.03.2009**
(21) Anmeldenummer: 06016436.5
(22) Anmeldetag: 07.08.2006
(51) Int. Cl.: B62D 29/04

(54) **Verwendung von Thermoplasten für In-Line lackierfähige Aussenbauteile der LKW-Karosserie**
Use of thermoplastic for a truck body element having a good paint adhesion
Utilisation de thermoplastiques dans des éléments extérieurs de carrosserie de camion succeptible d'être peints en serie

(30) Priorität: 18.08.2005 DE 102005039022
(43) Veröffentlichungstag der Anmeldung: 21.02.2007
(73) Patentinhaber: MAN Nutzfahrzeuge Aktiengesellschaft, 80976 München (DE)
(72) Erfinder: Häberle, Hartmut, 81247 München (DE)

(56) Entgegenhaltungen:
- EP-A- 1 185 381
- DE-A1- 10 143 564

## Beschreibung

### Technisches Gebiet

Die Erfindung betrifft die Verwendung von Thermoplasten für eine Sichtfläche eines Kraftfahrzeugs, wobei an der Sichtfläche lackierfähige Außenhautbauteile vorgesehen sind, die in Class-A Qualität ausgeführt sind.

### Stand der Technik:

Die Erfindung geht aus von der DE 101 43 564 A1.

Hieraus ist ein Bauteil einer Verkleidung einer Kraftfahrzeugkarosserie bekannt, das aus einem mit 15 bis 50% Gewichtsanteil aufweisenden Füllstoff gefüllten Polyester-ASA-Blend hergestellt ist, wobei der Polyester aus Polybutylenterephthalat (PBT) als linearem teilkristallinem thermoplastischen Polyester besteht. Dieses Bauteil ist auf seiner sichtbaren Oberfläche mit einer ein- oder mehrlagigen Folie versehen, die bei der Herstellung des Bauteils in der Form hinterspritzt wird.

Im Fahrzeugbau werden immer mehr Bauteile aus Kunststoff gefertigt. Der Grund hierfür liegt in den oftmals guten Verarbeitungseigenschaften der Kunststoffe sowie vor allem im geringen spezifischen Gewicht im Vergleich zu Blech. Hierbei kommen im Nutzfahrzeugbereich aufgrund der großen Abmessungen sowie der zum Teil hohen statischen und dynamischen Belastungen, denen die Bauteile, beispielsweise während des Betriebs eines Lastkraftwagens auf unebenen Fahrstrecken, ausgesetzt sind, vor allem faserverstärkte Werkstoffe zum Einsatz. Als Werkstoff wird insbesondere für einteilig tragende Bauteile neben Polyester- (UP) oder Epoxydharz (EP) überwiegend SMC (sheet molding compound) verwendet. Nachteilig an den vorgenannten faserverstärkten Werkstoffen ist allerdings, dass sie für den Einsatz im Sichtbereich von Kraftfahrzeugen weitgehend nicht in Frage kommen, da die Oberflächengüte derartiger faserverstärkter Werkstoffe nur unter Einsatz eines verhältnismäßig großen Aufwands den hohen Qualitätsanforderungen in der Automobilindustrie entsprechend herstellbar ist.

Um den Kostenaufwand bei der Herstellung großflächiger Bauteile, die über Designflächen verfügen, zu minimieren, werden in der Automobilindustrie oftmals mehrteilige Konstruktionen verwendet, bei denen die Bauteile, die Sicht- bzw. Designflächen aufweisen, auf so genannte Stützkonstruktionen aufgebracht werden. Die Stützkonstruktionen sind üblicherweise aus Stahl gefertigt und können, da sie nach der Montage von den Oberflächenkunststoffteilen verdeckt sind, relativ einfach ausgeführt werden. Die Kunststoffbauteile, die die Sichtfläche bilden, werden auf diesen Stützkonstruktionen aufgeschraubt, genietet oder mit anderen bekannten Verfahren befestigt. Aufgrund der mehrteiligen Ausführungen weisen derartige technische Lösungen allerdings Nachteile, wie Fugenbildung und Toleranzempfindlichkeit auf. Weitere Nachteile der mehrteiligen Bauart sind die Korrosionsempfindlichkeit sowie der eventuell auftretende Schweißverzug der Stahlkonstruktion und ferner die unterschiedliche Längenausdehnung der Stützkonstruktion gegenüber der Kunststoffaußenhaut.

Neben den zuvor beschriebenen technischen Problemen ist bei der Lackierung eines Kraftfahrzeugs darauf zu achten, dass auch bei unterschiedlichen Bauteilen der gleiche Farbton gewährleistet sein muss, da das menschliche Auge sehr empfindlich gegen auftretende Farbunterschiede ist. Insbesondere im Bereich der Fahrzeugkarosserie oder des Fahrerhauses eines Nutzfahrzeugs sollten die Kunststoffaußenhautbauteile daher gemeinsam mit dem tragenden Teilen des Stahlblechrohbaus lackiert werden. Die Anforderung, die aufgrund der Lackierparameter an die Werkstoffe gestellt werden, erfüllt derzeit bei größeren Anbauteilen lediglich SMC. SMC ist eine Formmasse, die aus einer Glasfaserverstärkten, duroplastischen Matrix besteht. Neben vielen Vorteilen, wie etwa der hohen Strukturfestigkeit sowie der hohen dynamischen Belastbarkeit, hat SMC allerdings auch einen erheblichen Nachteil. Beim Lackieren dieses Werkstoffs entstehen oftmals Oberflächenbeschädigungen, wie etwa so genannte "Bubbles" oder "Pinholes", die darauf zurückzuführen sind, dass während des Lackierprozesses das in die oberflächlichen Kavitäten eingedrungene Lösungsmittel des Lackes verdampft bzw. oberflächennahe Lufteinschlüsse aufbrechen. Bei der Trocknungstemperatur des In-Line-Lackierprozesses von etwa 150°C verdampft in diesen Fällen das in oberflächliche Kavitäten eingedrungene Lösemittel des Lackes und sprengt die darüber liegende Lackschicht. Derartig beschädigte Teile müssen ausgeschleust und nachlackiert werden.
Auch bei der so genannten Off-Line-Lackierung, bei der Temperaturen von etwa 80°C erreicht werden, können die vorgenannten Probleme auftreten. In jedem Fall müssen die Teile, die eine Lackbeschädigung aufweisen, aufwendig nachgearbeitet bzw. nachlackiert oder im schlechtesten Fall verschrottet werden.

Als Werkstoff für Kunststoffbauteile, die im Bereich von Kraftfahrzeugkarosserien vorgesehen sind, eignen sich vor allem Thermoplaste. Dies ist darauf zurückzuführen, dass diese Kunststoffe, da sie insbesondere warm umformbar und schweißbar sind, leicht zu verarbeiten, sind, so dass auf diese Weise eine kostengünstige Fertigung von Massenteilen ermöglicht wird. Hierbei werden thermoplastische Werkstoffe vor allem deswegen vielfach verwendet, da sie maßhaltig sind und eine reproduzierbare Herstellung ermöglichen, die Herstellzeit der Bauteile kurz ist und die Werkstoffe sich während der Herstellung chemisch weitgehend nicht verändern. Zudem kann bei der dieser Art des Kunststoffes auf eine breite Palette thermoplastischer Kunststofftypen mit Eigenschaften für fast jeden Verwendungszweck zurückgegriffen werden.

Nachteilig bei der Verwendung von Thermoplasten ist allerdings, dass bislang im Thermoplastbereich lediglich wenige Materialien bekannt sind, die den oben genannten Lackiertemperaturen von bis zu 150°C widerstehen. Bei den einzigen temperaturbeständigen Thermoplasten, die bislang in der Fahrzeugindustrie verwendet werden, handelt es sich um Blends, also um Polymerlegierungen, aus Polyphenylenoxid und Polyamid (PPO/PA). Da der Polyamidanteil allerdings stark hygroskopisch ist, also dazu neigt Wasser aufzunehmen, können bei derartigen Werkstoffen nicht ohne weiteres wasserbasierte Grundierungen bzw. Lacke eingesetzt werden. Um mit einem wasserbasierten Decklack beschichtet werden zu können, müssen aus Polyphenylenoxid und Polyamid (PPO/PA) hergestellte Bauteile in einem vorgelagerten Grundierungsschritt mit einer lösemittelhaltigen Grundierung "versiegelt" werden. Weiterhin ist zu beachten, dass der Längenausdehnungskoeffizient dieses Materials im Vergleich zu Stahl sehr groß ist, so dass eine schwimmende Lagerung der Bauteile am Unterbau vorgesehen werden müsste.

Unter Berücksichtigung der vorgenannten Probleme bei der Herstellung und anschließenden Lackierung von Kunststoffbauteilen wird ein Verfahren benötigt, durch das ein Bauteil herstellbar ist, das einerseits eine hohe Strukturfestigkeit und andererseits eine Class-A Oberflächenqualität aufweist. Insbesondere sollte auch der während des Produktionsprozesses auftretende Bauteilverzug minimiert werden. Dies ist vor allem wichtig, um eine große Längenänderung der Bauteile zu verhindern, so dass keine verhältnismäßig kompliziert aufgebauten Lackiergestelle, die ein freies Längen und wieder Verkürzen der Bauteile ermöglichen, eingesetzt werden müssen. Hierbei sollte das Verfahren vor allem im Zusammenhang mit einer In-Line-Lackierung mit einem garantierten Lackierausschuss von weniger als 5% Lackierfehler ausgehend vom zu lackiereden Bauteilsubstrat anzuwenden sein. Weiterhin sollte die Technologie bzw. der verwendete Werkstoff derart gewählt werden, dass zum einen komplexe Bauteilgeometrien auch mit hohen Umformgraden herstellbar sind und zum anderen die Beschichtung mit einem wasserbasierten Lack ermöglicht wird. Der verwendete Werkstoff muss also derart gewählt werden, dass er während der Fertigung bzw. Lackierung nur geringfügig Wasser aufnimmt.

Unter Zusammenfassung der vorstehend erläuterten Problemstellung liegt der Erfindung somit die Aufgabe zugrunde, einen Werkstoff anzugeben, der einen Längenausdehnungskoeffizienten aufweist, der dem von SMC ähnlich ist bzw. diesem sehr nahe kommt, und somit eine harte Verbindung zum Unterbau ermöglicht und der gleichzeitig einer Lackiertemperatur von mindestens 150°C widersteht.

Die Lösung der der Erfindung zugrunde liegenden Aufgabe ist im Anspruch 1 angegeben. Vorteilhafte Ausführungsbeispiele sind Gegenstand der Unteransprüche sowie der Beschreibung zu entnehmen.

Erfindungsgemäß wird ein Bauteil gemäß Anspruch 1 hergestellt. Der verwendete thermoplastische Kunststoffwerkstoff bietet den Vorteil einer geringen Längenausdehnung, damit einer erhöhten Bauteilstabilität, und nimmt ferner während der Lackierung mit wasserbasierten Grundierungen bzw. Lacken nur geringfügig Wasser auf.

Wesentlicher Vorteil bei der Verbindung eines mit wenigstens einem Füllstoff gefüllten Polyester―ASA―Blends ist, dass mit diesem Werkstoff trotz der die Festigkeit des Bauteils erhöhenden Faserfüllung eine Class―A Oberflächenqualität zu gewährleisten ist. In einer speziellen Ausführungsform der Erfindung ist der Polyster-ASA-Blend mit Fasern, insbesondere Glasfasern, gefüllt. Alternativ oder ergänzend ist es ebenfalls denkbar, Kohlenstofffasern, Aramidfasern und/oder Naturfasern zur Füllung des Polyester-ASA-Blends vorzusehen. Eine weitere Alternative oder Ergänzung bei der Wahl des Füllstoffs stellt die Verwendung von Partikeln dar. Vorzugsweise werden bei einer derartigen Ausführungsform Glaskugeln als Füllstoff eingesetzt.

Erfindungsgemäß wird ein Polyester-ASA-Blend eingesetzt, der einen Gewichtsanteil von 15 Prozent bis 50% Füllstoff aufweist. Ganz speziell eignet sich in diesem Zusammenhang ein Polyester-ASA-Blend, der einen Gewichtsanteil von 25 bis 35%, insbesondere von 30% aufweist. In jedem Fall bietet ein lackierter Polyester-ASA-Blend neben hoher Steifigkeit und guter Witterungsstabilität eine weitaus geringere Verzugsneigung als reine Polyesterprodukte. Damit eignet sich ein Polyester-ASA-Blend für Anwendungen im Automobilbereich. Überraschenderweise ist nunmehr in diesem Zusammenhang festgestellt worden, dass trotz des Zusatzes von wenigstens einem Füllstoff mit dem zuvor genannten Polyester-ASA-Blend eine Class-A Oberflächenqualität erzeugbar ist.

In einer ganz besonderen Ausführungsform der Erfindung wird dem Kunststoff Flammschutzmittel zugesetzt werden. Auf diese Weise wird sichergestellt, dass ein aus mit wenigstens einem Füllstoff gefüllten Polyester-ASA-Blend hergestelltes Karosseriebauteil bei einem Fahrzeugunfall zumindest nur schwer entflammbar ist.

Die Erfindung sieht dagegen die Verwendung von Polybutylenterephthalat PBT vor. Bei PBT handelt es sich um einen linearen Polyester nach DIN 16779, ISO 7792. Dieser Polyester ist ein Teilkristalliner Thermoplast, wobei PBT milchig weiß ist.
Lineare Polyester wie PBT zeichnen sich durch ihre günstigen mechanischen Eigenschaften über einen weiten Temperaturbereich aus. Günstiges Langzeitverhalten und geringer Abrieb bei guten Gleiteigenschafen sind weitere spezielle Merkmale dieser Polyester. Weiterhin weisen derartige lineare Polyester ein sehr geringes Feuchteaufnahmevermögen, ein kleines Wärmedehnungsvermögen sowie sehr gute elektrische Isoliereigenschaften auf. PBT findet daher bislang Anwendung für Formteile mit hoher Maßhaltigkeit bei guten Lauf- und Gleiteigenschaften in Maschinenbau und Feinwerktechnik, für Haushalt- und Büromaschinen. Weiterhin werden sie als Tafeln, Profile, Rohre sowie als Folien für Audiobänderkondensatoren, Klebebänder und zur Isolierung verwendet.

Bei ASA handelt es sich nach DIN 16777, ISO 6402 um einen amorphen Thermoplast, der oftmals als Polymerisatgemisch oder Kopolymerisat eingesetzt wird. ASA zeichnet sich durch seine erhöhte Witterungsbeständigkeit aus und ist daher besonders gut bei Außenanwendungen einsetzbar. Als Bestandteil bei dem für die erfindungsgemäße Verwendung vorgesehenen Glasfasergefüllten Polyester-ASA-Blend ist dieser Thermoplast besonders geeignet.

Neben der Wahl eines geeigneten Werkstoffs zur Erzeugung einer Class-A Oberflächenqualität von Karosseriebauteilen wird eine weitere Verbesserung des Werkstoffverhaltens in fertigen Bauteil durch eine geeignete Wahl der Verarbeitungsparameter und die Auslegung der Werkzeuge erzielt. Im Folgenden wird daher die Herstellung eines Karosseriebauteils, das zumindest teilweise die sichtbare Oberfläche eines Kraftfahrzeugs bildet, und bei dem der Kunststoff als ein mit Fasern gefüllter Polyester-ASA-Blend ausgeführt ist, näher erläutert. Der Erfindungsgedanke wird jedoch durch die Wahl des Herstellungsverfahrens nicht eingeschränkt.

Durch mehrere, in Reihe geschaltete Einspritzpunkte, die zu dem noch kaskadiert angesteuert werden, also zeitversetzt nacheinander den Materialeintrag ins Werkzeug ermöglichen, wird die Fließrichtung der Schmelze in Bauteillängsrichtung gelegt. Der erste Anspritzpunkt wird hierbei vorzugsweise an ein Bauteilende gelegt. Diese Art der Herstellung eines Fasergefüllten Polyester-ASA-Blends bietet im Wesentlichen zwei Vorteile. Zum einen wird die Längenausdehnung durch die in Fließrichtung gerichteten Fasern zu kleineren Werten hin optimiert. Zum anderen werden Binde- bzw. Fließnähte also Linien, an denen die Schmelze zusammenfließt, auf null reduziert. Auf diese Weise wird verhindert, dass Binde- bzw. Fließnähte bei decklackierten Bauteilen bis auf die Lackoberfläche durchschlagen. Somit wird auf effektive Weise verhindert, dass derartige Fließnähte sichtbar werden.

Um eine Class-A Oberflächenqualität der sichtbaren Kunststoff-Karosseriebauteile aus Fasergefülltem Polyester-ASA-Blend zu gewährleisten, wird weiterhin durch eine entsprechende Werkzeugtemperierung und Steuerung der Einspritzgeschwindigkeit ein aufschwimmen der Fasern an die Bauteiloberfläche verhindert. Somit liegt direkt an der Oberfläche des Bauteils nur der Kunststoffwerkstoff aus Polyester-ASA-Blend vor, was die Herstellung einer Kunststoffbauteiloberfläche in Class-A-Qualität sicher stellt.

Wegen der Minimierung der Längenänderungen in Richtung der größten Bauteilausdehnung ist es möglich, einfachere Lackiergestelle zu verwenden. Diese sollten derart ausgelegt sein, dass eine Längenänderung der Bauteile in zumindest einer Richtung zugelassen wird. Vorteilhaft ist in diesem Zusammenhang, das Bauteil derart aufzunehmen, dass das Bauteilgewicht flächig abgestützt wird, um so auf das Bauteil einwirkende Biegekräfte während des Lackier- und/oder Trocknungsprozesses und somit eine Bauteilverformung zu verhindern.

## Patentansprüche

1. Bauteil einer Verkleidung einer Kraftfahrzeugskarosserie, das aus einem mit 15 bis 50% Gewichtsanteil aufweisenden Füllstoff gefüllten Polyester-ASA-Blend hergestellt ist, wobei der Polyester aus Polybutylenterephthalat (PBT) als linearem, teilkristallinem thermoplastischen Polyester besteht, und dessen während des Betriebes des Kraftfahrzeugs sichtbare Oberfläche lackiert ist.

2. Bauteil nach Anspruch 1
**dadurch gekennzeichnet, dass** als Füllstoff zumindest abschnittsweise Glasfasern eingesetzt werden.

3. Bauteil nach Anspruch 1,
**dadurch gekennzeichnet, dass** als Füllstoff Kohlenstoff-, Natur- und/oder Aramidfasern eingesetzt werden.

4. Bauteil nach Anspruch 1,
**dadurch gekennzeichnet, dass** als Füllstoff Partikel verwendet werden.

5. Bauteil nach Anspruch 4,
**dadurch gekennzeichnet, dass** die Partikel als Glaskugeln ausgeführt werden.

6. Bauteil nach einem der Ansprüche 1 bis 5,
**dadurch gekennzeichnet, dass** ein Polyester-ASA-Blend eingesetzt wird, der einen Gewichtsanteil von 25% bis 35% Füllstoff aufweist.

7. Bauteil nach einem der Ansprüche 1 bis 5,
**dadurch gekennzeichnet, dass** ein Polyester-ASA-Blend eingesetzt wird, der einen Gewichtsanteil von 30% Füllstoff aufweist.

## Claims

1. Component of a panelling of a motor vehicle body, manufactured from a polyester-ASA blend and filled with 15 to 50% filler by weight, whereby the polyester consists of polybutylene terephthalate (PBT) as a linear, partly-crystalline thermoplastic polyester, and whose surface visible during the operation of the motor vehicle is painted.

2. Component according to Claim 1, **characterised in that** glass fibres are used as filler, at least in sections.

3. Component according to Claim 1, **characterised in that** carbon fibres, natural fibres and/or aramid fibres are used as filler.

4. Component according to Claim 1, **characterised in that** particles are used as filler.

5. Component according to Claim 4, **characterised in that** the particles are constructed as glass spheres.

6. Component according to one of the Claims 1 to 5, **characterised in that** a polyester-ASA blend containing 25% to 35% filler by weight is used.

7. Component according to one of the Claims 1 to 5, **characterised in that** a polyester-ASA blend containing 30% filler by weight is used.

## Revendications

1. Pièce d'un carénage d'une carrosserie de véhicule à moteur, qui est fabriquée à partir d'un mélange de polyester et de ASA rempli d'une substance de remplissage présentant une part pondérale comprise entre 15 et 50 %, auquel cas le polyester se compose de polybutylène-téréphtalate (PBT) comme polyester thermoplastique linéaire, partiellement cristallin, et dont la surface visible pendant l'exploitation du véhicule à moteur est laquée.

2. Pièce selon la revendication 1,
**caractérisée en ce que** des fibres de verre sont mises en place au moins par section comme substance de remplissage.

3. Pièce selon la revendication 1,
**caractérisée en ce que** des fibres en carbone, naturelles et/ou aramides sont mises en place comme substance de remplissage.

4. Pièce selon la revendication 1,
**caractérisée en ce que** des particules sont utilisée comme substance de remplissage.

5. Pièce selon la revendication 4,
**caractérisée en ce que** les particules se présentent sous forme de boules en verre.

6. Pièce selon l'une des revendications 1 à 5,
**caractérisée en ce qu'**un mélange polyester-ASA est utilisé et présente une part de poids de 25 à 35 % de la substance de remplissage.

7. Pièce selon l'une des revendications 1 à 5,
**caractérisée en ce qu'**un mélange polyester-ASA est utilisé et présente une part pondérale de 30 % de la substance de remplissage.
